# EUROPEAN PATENT APPLICATION

(11) **EP 4 779 772 A1**
(43) Date of publication of application: **22.07.2026**
(21) Application number: 25226335.5
(22) Date of filing: 22.12.2025
(51) Int. Cl.: H01M 50/209, H01M 50/30

(54) **BATTERY MODULE**

(30) Priority: 17.01.2025 KR 20250007472
(71) Applicant: SAMSUNG SDI CO., LTD., Yongin-si, Gyeonggi-do 17084 (KR)
(72) Inventor: YANG, Chanlan, 17084 Yongin-si, Gyeonggi-do (KR)
(74) Representative: Gulde & Partner

(57) **Abstract**

A battery module includes: a plurality of battery cells; and a case accommodating the plurality of battery cells, wherein the case includes: a lower plate supporting lower portions of the plurality of battery cells; a side plate defining an accommodating space for the plurality of battery cells together with the lower plate; and a partition wall between the side plate and the plurality of battery cells, the partition wall being spaced apart from the side plate.

## Description

### BACKGROUND

### 1. Field

Aspects of some embodiments of the present invention relate to a battery module.

### 2. Description of the Related Art

Secondary batteries are batteries which can be repeatedly charged and discharged without being damaged, unlike primary batteries which cannot be recharged. Low-capacity battery cells may be used in small, portable electronic devices such as smartphones, feature phones, laptops, digital cameras, and camcorders, while high-capacity battery cells are widely used as power sources for driving motors in hybrid cars, electric cars, or the like, and as power storage batteries. These battery cells may include an electrode assembly including a positive electrode and a negative electrode, an outer case for accommodating the electrode assembly, electrode terminals connected to the electrode assembly, or the like.

The above information disclosed in this Background section is only for enhancement of understanding of the background and therefore the information discussed in this Background section does not necessarily constitute prior art.

### SUMMARY

Aspects of some embodiments of the present invention relate to a battery module with improved stability.

However, the characteristics of embodiments according to the present invention are not limited to the characteristics described above, and other characteristics not mentioned may be more clearly understood by those skilled in the art from the description of the invention described below.

Aspects of some embodiments of the present invention include a battery module, including a plurality of battery cells; and a case for accommodating the plurality of battery cells, wherein the case includes a lower plate supporting lower portions of the plurality of battery cells, a side plate defining an accommodating space for the plurality of battery cells together with the lower plate, and a partition wall positioned between the side plate and the plurality of battery cells, and the partition wall is arranged to be spaced apart from the side plate.

According to some embodiments, a fixing portion for fixing the position of the partition wall may be further included, and the fixing portion is deformable when a temperature exceeds a preset temperature, and the partition wall is movable by the deformation of the fixing portion.

According to some embodiments, the partition wall may include a plurality of first holes.

According to some embodiments, the partition wall may include a plurality of protrusions facing the side plate.

According to some embodiments, the side plate may include a plurality of second holes.

According to some embodiments, the plurality of second holes may be arranged to be misaligned with the plurality of first holes.

According to some embodiments, the plurality of second holes may be arranged such that the plurality of protrusions penetrate the second holes.

According to some embodiments, each of the plurality of second holes may have a shape corresponding to each of the plurality of protrusions.

According to some embodiments, the partition wall may be movable toward the side plate.

According to some embodiments, the partition wall may include a support portion which is bent toward the side plate.

Aspects of some embodiments of the present invention include a battery module, including a plurality of battery cells; and a case for accommodating the plurality of battery cells, wherein the case includes a lower plate supporting lower portions of the plurality of battery cells, a partition wall arranged at a side of each of the plurality of battery cells and including a plurality of first holes, and a side plate defining an accommodating space for the plurality of battery cells and the partition wall together with the lower plate and including a plurality of second holes, and the plurality of first holes and the plurality of second holes are arranged to be misaligned with each other.

According to some embodiments, the partition wall may be arranged to be spaced apart from the side plate.

According to some embodiments, the partition wall may be movable toward the side plate.

According to some embodiments, the partition wall may include a plurality of protrusions facing the side plate.

According to some embodiments, the plurality of second holes may be arranged such that the plurality of protrusions penetrate the second holes.

According to some embodiments, each of the plurality of second holes may have a shape corresponding to each of the plurality of protrusions.

According to some embodiments, the partition wall may include a support portion which is bent toward the side plate.

According to some embodiments, a fixing portion for fixing the position of the partition wall may be further included.

According to some embodiments, the fixing portion may be deformable when a temperature exceeds a preset temperature, and the partition wall may be movable by the deformation of the fixing portion.

According to some embodiments, at least one of the lower plate or the side plate may include a guide rail for guiding the movement of the partition wall, and the partition wall may include a guide groove which engages with the guide rail.

### BRIEF DESCRIPTION OF THE DRAWINGS

The following drawings attached to the specification illustrate aspects of some embodiments of the present invention and serve to further understand the characteristics of embodiments according to the present invention together with the detailed description of the invention described below; therefore, embodiments according to the present invention should not be interpreted as being limited to matters described in such drawings:
FIG. 1 is a perspective view schematically illustrating an example of a battery module according to some embodiments of the present invention;
FIG. 2 is a perspective view schematically illustrating an example of a battery cell of FIG. 1;
FIG. 3 is a cross-sectional view schematically illustrating an example of a cross-section taken along a line III-III' of FIG. 2;
FIG. 4 is a perspective view schematically illustrating an example of a battery module according to some embodiments of the present invention;
FIG. 5 is a perspective view for explaining an operation of the battery module of FIG. 4;
FIGS. 6 and 7 are plan views for explaining an operation of the battery module of FIG. 4;
FIG. 8 is a plan view illustrating a modified example of FIG. 6;
FIG. 9 is a perspective view schematically illustrating an example of a battery module according to some embodiments of the present invention;
FIG. 10 and FIG. 11 are plan views for explaining an operation of the battery module of FIG. 9; and
FIG. 12 is a drawing illustrating modified examples of a partition wall and a side plate of FIG. 1.

### DETAILED DESCRIPTION

Hereinafter, aspects of some embodiments of the present invention will be described in more detail with reference to the attached drawings. Prior to this, terms or words used in the specification and claims should not be interpreted as limited to usual or dictionary meanings and should be interpreted as meanings and concepts that conform to the technical idea of the invention based on the principle that the inventor may appropriately define the concept of a term to explain his or her own invention in the best way. Therefore, the embodiments described in the specification and the configurations illustrated in the drawings are only aspects of some embodiments of the present invention and do not represent all the technical idea of the invention, and therefore it should be understood that there may be various equivalents and modified examples that may replace them at the time of filing the application.

In some embodiments, when used herein, the words "comprise", "include", and/or "comprising", "including" may specify the presence of stated features, numbers, steps, operations, members, elements and/or groups thereof, but may not preclude the presence or addition of one or more other features, numbers, operations, members, elements and/or groups thereof.

In some embodiments, to aid understanding of the invention, the attached drawings are not drawn on an actual scale and the dimensions of some components may be exaggerated. In some embodiments, which are different from each other, the same reference numbers may be assigned to the same components.

Although the terms first, second, or the like are used to describe various components, these components are not limited by these terms. These terms are used only to distinguish a component from another, and unless otherwise specifically stated, it goes without saying that a first component may also be a second component.

Throughout the specification, unless otherwise specifically stated, each component may be singular or plural.

Any configuration being placed "at the top (or bottom) of" a component or "on (or below)" a component may mean not only that any configuration is arranged to contact an upper surface (or a lower surface) of the component, but also that another configuration may be interposed between the component and any configuration arranged on (or below) the component.

In some embodiments, in case that it is described that a component is "connected," "coupled," or "linked" to another component, it should be understood that the components may be directly connected or linked to each other, but that other components may also be "interposed" between each component, or that each component may be "connected," "coupled," or "linked" through other components. In some embodiments, when we say that a part is electrically coupled to another part, this includes not only cases where the parts are directly connected to each other, but also cases where the parts are connected to each other with another element in between.

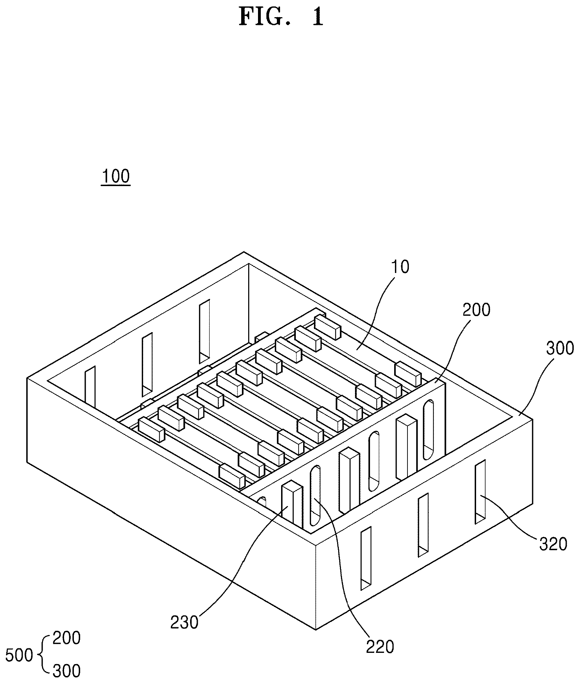

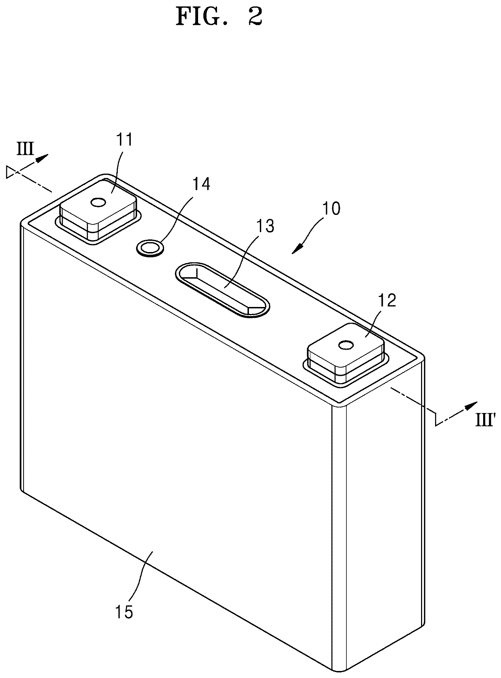

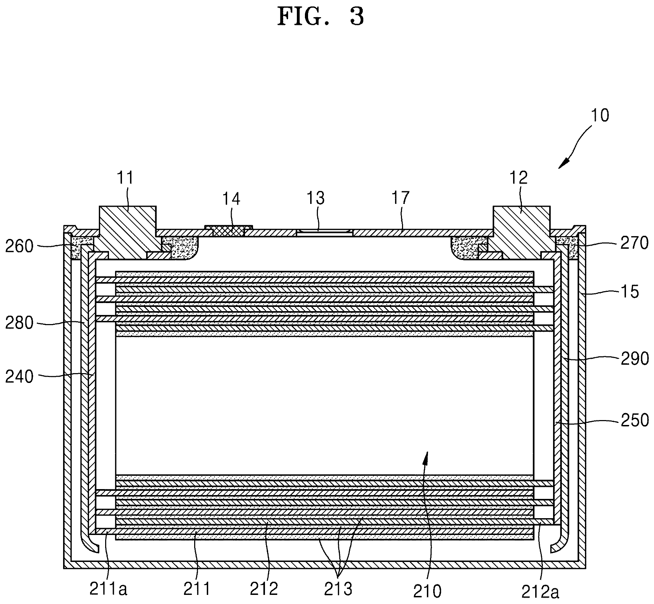

FIG. 1 is a perspective view schematically illustrating an example of a battery module according to some embodiments of the present invention, FIG. 2 is a perspective view schematically illustrating an example of a battery cell of FIG. 1, and FIG. 3 is a cross-sectional view schematically illustrating an example of a cross-section taken along a line III-III' of FIG. 2.

Referring to FIGS. 1 to 3, a battery module 100 according to some embodiments of the present invention may include a plurality of battery cells 10 and a case 500 for accommodating the plurality of battery cells 10.

Each battery cell 10 accommodated in the case 500 may include at least one electrode assembly 210 wound with a separator 213, which is an insulator, interposed between a positive electrode 211 and a negative electrode 212 and an outer case 15 for accommodating the electrode assembly 210.

The battery cell 10 according to some embodiments may be described as a square lithium ion battery cell as an example. However, embodiments according to the present invention are not limited thereto, and embodiments according to the present invention may be applied to various types of battery cells such as lithium polymer battery cells or cylindrical battery cells.

The positive electrode 211 and the negative electrode 212 may include a coated portion, which is an area where an active material is applied to a current collector including a metal foil of a thin plate, and non-coated portions 211a and 212a, which are areas where the active materials are not coated.

The positive electrode 211 and the negative electrode 212 may be wound with a separator 213, which is an insulator, interposed therebetween. However, the invention is not limited thereto, and the electrode assembly 210 described above may include a structure in which a positive electrode 211 and a negative electrode 212 including a plurality of sheets are alternately laminated with a separator 213 interposed therebetween.

The outer case 15 may form the overall appearance of the battery cell 10 and may include a conductive metal such as aluminum, an aluminum alloy, or nickel-plated steel. According to some embodiments, the outer case 15 may provide a space in which the electrode assembly 210 is accommodated.

The battery cell 10 may include a cap plate 17 covering an opening of the outer case 15, and the outer case 15 and the cap plate 17 each may include a conductive material. In this regard, a first terminal 11 and a second terminal 12 electrically connected to the positive electrode 211 or the negative electrode 212 may be installed to protrude outward by penetrating the cap plate 17.

According to some embodiments, the outer main surfaces of upper pillars of the first terminal 11 and the second terminal 12 protruding outward from the cap plate 17 may be screwed and each may be fixed to the cap plate 17 with a nut.

However, the invention is not limited thereto, and the first terminal 11 and the second terminal 12 each may include a rivet structure to be riveted or may be welded to the cap plate 17.

In some embodiments, the cap plate 17 including a thin plate may be coupled to the opening of the outer case 15, and an electrolyte injection port 14 in which a sealing plug may be installed may be formed in the cap plate 17, and a vent portion 13 with a notch formed may be installed.

The first terminal 11 and the second terminal 12 each may be electrically coupled to a current collector including a first current collector 240 and a second current collector 250 (hereinafter referred to as a positive electrode current collector and a negative electrode current collector) welded to a positive electrode non-coated portion 211a or a negative electrode non-coated portion 212a.

In some embodiments, the first terminal 11 and the second terminal 12 may be welded to the positive electrode current collector 240 and the negative electrode current collector 250, respectively. However, the invention is not limited thereto, and the first terminal 11 and the second terminal 12 and the positive electrode current collector 240 and the negative electrode current collector 250 may be formed integrally.

In some embodiments, an insulation member may be installed between the electrode assembly 210 and the cap plate 17. In this regard, the insulation member may include a first lower insulation member 260 and a second lower insulation member 270, and each of the first lower insulation member 260 and the second lower insulation member 270 may be installed between the electrode assembly 210 and the cap plate 17.

In some embodiments, an end of a separation member which may be installed facing a side surface of the electrode assembly 210 may be installed between the insulation member and the first terminal 11 and the second terminal 12, and the separation member may include a first separation member 280 and a second separation member 290. Accordingly, an end of the first separation member 280 and an end of the second separation member 290 which may be installed facing a side surface of the electrode assembly 210 may be installed between the first lower insulation member 260 and the second lower insulation member 270 and the first terminal 11 and the second terminal 12.

Finally, the first terminal 11 and the second terminal 12 welded to the positive electrode current collector 240 and the negative electrode current collector 250 may be coupled to the first lower insulation member 260 and the second lower insulation member 270 and an end of the first separation member 280 and an end of the second separation member 290.

The case 500 may include a lower plate, a side plate 300 including a plurality of second holes 320, and a partition wall 200 including a plurality of first holes 220 and a plurality of protrusions 230.

A plurality of battery cells 10 may be arranged in a direction so that the wide surfaces of the battery cells 10 face each other, and the lower plate may be positioned on the lower surfaces of the battery cells 10, which are arranged, to support the lower portions of the battery cells 10.

The side plate 300 may define an accommodating space for a plurality of battery cells 10 together with the lower plate. The side plate 300 may be vertically coupled to the lower plate along the perimeter of an edge of the lower plate to surround the battery cells 10.

The partition wall 200 may be positioned between a plurality of battery cells 10 and the side plate 300 and may be arranged to be spaced apart from the side plate 300. In some embodiments, the partition wall 200 may support the side surfaces of the battery cells 10 and may be arranged parallel to the side plate 300. A double structure of the partition wall 200 and the side plate 300 may stably maintain the alignment of the battery cells 10 and protect the battery module 100 from external impact and vibration, thereby improving the stability of the battery module 100.

A certain space may be formed between the partition wall 200 and the side plate 300. The space between the partition wall 200 and the side plate 300 may provide a space required for expansion of a battery cell 10 or the battery module 100 and may provide an air circulation space for cooling the battery module 100.

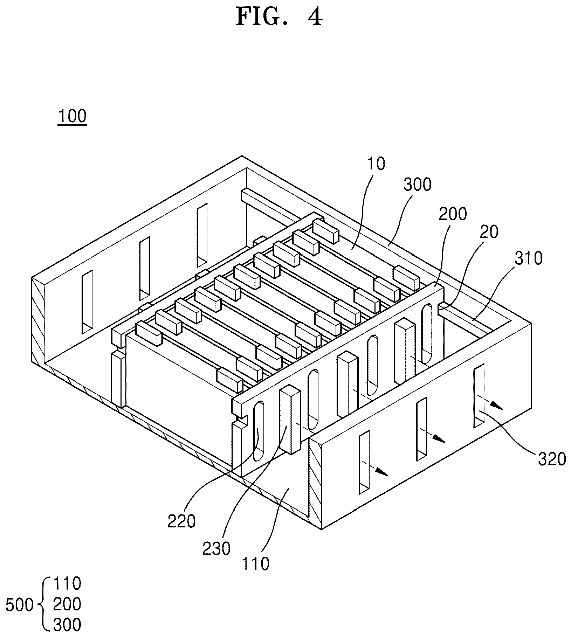

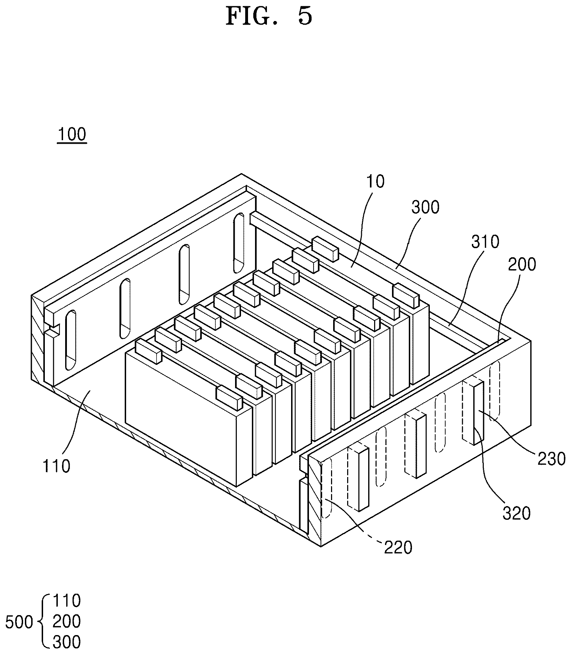

FIG. 4 is a perspective view schematically illustrating an example of a battery module according to some embodiments of the present invention, FIG. 5 is a perspective view for explaining an operation of the battery module of FIG. 4, and FIGS. 6 and 7 are plan views for explaining an operation of the battery module of FIG. 4.

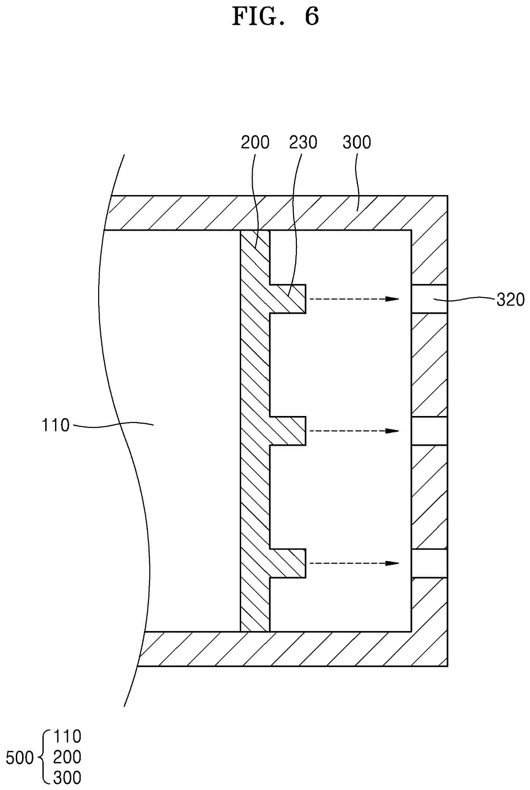

Referring to FIGS. 4 and 6, the partition wall 200 may include a plurality of first holes 220. A first hole 220 may be an air circulation passage for ventilation or airflow inside the battery module 100. Air flowing in and out through a first hole 220 may cool the battery module 100. A first hole 220 may be positioned at a side of each of the battery cells 10 to directly release heat generated from the battery cells 10 and quickly cool the battery module 100. A first hole 220 may prevent or reduce overheating of the battery module 100 by controlling air flow and efficiently preventing or reducing heat accumulation.

According to some embodiments, a first hole 220 may be arranged at regular intervals along a side surface of each of the plurality of battery cells 10, which are arranged. In some embodiments, a first hole 220 may be positioned at a constant interval every two battery cells 10, and in some embodiments, a first hole 220 may be positioned at a constant interval every four battery cells 10. A first hole 220 may suppress the temperature rises of a battery cell 10 and the battery module 100 and maintain an appropriate temperature to secure the performance of the battery module 100.

The side plate 300 may include a plurality of second holes 320. A second hole 320 may be an air circulation passage for exchanging the inside and outside air of the battery module 100 and for ventilation or airflow of the battery module 100. Air flowing in and out through a second hole 320 may cool the battery module 100. A second hole 320 may effectively lower the internal temperature of the battery module 100 by introducing outside air and prevent or reduce instances of contaminants directly entering the inside of the battery module 100.

A first hole 220 and a second hole 320 may prevent or reduce a temperature rise of the battery module 100 to delay or prevent or reduce the occurrence of a thermal event. In some embodiments, it may be possible to reduce a risk of fire by preventing or reducing damage or performance degradation of the battery module 100 due to overheating and improve the stability of the battery module 100.

A first hole 220 of the partition wall 200 and a second hole 320 of the side plate 300 may be arranged to be misaligned with each other. The term "misaligned" in context of the present invention, means that the first hole 220 and second dole 320 maybe offset from each other, thus are not aligned with each other in one direction. In some embodiments, the first holes 220 of the partition wall 200 may be positioned between the second holes 320 of the side plate 300, or the second holes 320 of the side plate 300 may be positioned between the first holes 220 of the partition wall 200.

Air passing through a first hole 220 and a second hole 320 may circulate inside and outside the battery module 100 without obstruction and maintain an independent path. The misalignment between a first hole 220 and a second hole 320 may increase the amount of air flowing into the battery module 100 and provide improved ventilation and cooling effects.

The size of a first hole 220 and the size of a second hole 320 may be 5 mm to 30 mm in width and 40 mm to 300 mm in height, and the total areas of the holes may be 0.1% to 20% of the total area of the case 500.

In case that the sizes of the holes exceed a certain size or the areas of the holes exceed a certain percentage of the area of the case 500, moisture, foreign substances, or the like may flow into the battery module 100, causing an electrical short circuit or shortening the lifespan of the battery module 100. In some embodiments, the protection function of the battery module 100 of the case 500 may be reduced, causing the battery module 100 to become vulnerable to external impact or damage.

Conversely, in case that the sizes of the holes are less than a certain size or the areas of the holes are less than a certain percentage of the area of the case 500, the battery module 100 may overheat due to heat accumulation and damage may occur due to physical expansion or deformation of the battery module 100. In some embodiments, gas and increased pressure generated inside the battery module 100 may cause a fire.

In some embodiments, the partition wall 200 may include a plurality of protrusions 230 facing the side plate 300. A protrusion 230 may be positioned not to obstruct the flow of air passing through a first hole 220. In some embodiments, the protrusions 230 may be arranged between the first holes 220, or the first holes 220 may be arranged between the protrusions 230, or the protrusions 230 and the first holes 220 may have a cross-arrangement structure in which they are sequentially repeated.

The second holes 320 of the side plate 300 may be arranged such that the protrusions 230 of the partition wall 200 penetrate the second holes 320. The protrusions 230 of the partition wall 200 may engage with the second holes 320 as the partition wall 200 moves. Each of the second holes 320 may have a shape corresponding to each of the protrusions 230 and may seal the case 500 for accommodating a plurality of battery cells 10 by engaging with a protrusion 230.

A protrusion 230 may physically isolate an internal space from an external environment by blocking an open space of a second hole 320. A protrusion 230 and a second hole 320 may seal the case 500 to prevent or reduce the leakage of gas and particles. This may prevent or reduce heat conduction and heat transfer and may improve the stability of the battery module 100 by preventing or reducing the occurrence of a chain of fire. The protruding configuration, shape, size, or the like of a protrusion 230 may vary, and by changing these, the sealing strength of the case 500 may be controlled.

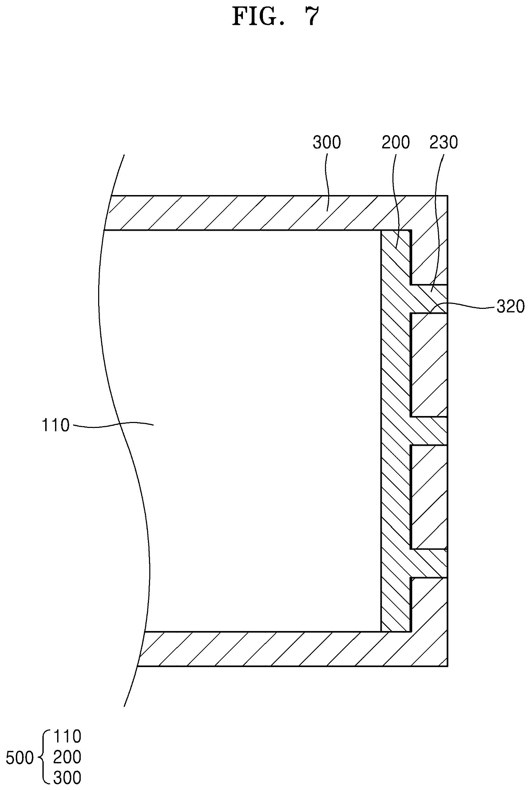

Referring to FIGS. 5 and 7, the partition wall 200 may be movable toward the side plate 300. The partition wall 200 may move under the pressure caused by gas and flying substances emitted when ignition or thermal runaway of a battery cell 10 occurs and the volume expansion of a battery cell 10. In some embodiments, the partition wall 200 may be arranged to be spaced apart from the side plate 300, so that when thermal runaway of a battery cell 10 occurs, a vent portion 13 may be opened and gas or the like, which is discharged from the vent portion 13, may push the partition wall 200 toward the side plate 300.

As the partition wall 200 moves, the separation distance and the space between the partition wall 200 and the side plate 300 may decrease. In case that the partition wall 200 and the side plate 300 are in contact with each other, an open space of a first hole 220 may be blocked by the side plate 300, and an open space of a second hole 320 may be blocked by the engagement with a protrusion 230.

The strong heat, high-temperature and high-pressured gas, and by-products generated when thermal runaway of a battery cell 10 occurs may be leaked to the outside, causing damage to the battery module 100 and components. The partition wall 200 and the side plate 300 may seal the case 500 to separate the internal space from the external environment and prevent or reduce the movement and propagation of gas and byproducts. This may prevent or reduce instances of additional events occurring and improve the stability of the battery module 100. The material, shape, size, or the like of the partition wall 200 may be varied, and by changing these, the sealing time of the case 500 may be controlled.

In some embodiments, at least one of the lower plate 110 or the side plate 300 may include a guide rail 310 for guiding the movement of the partition wall 200. The partition wall 200 may include a guide groove 20 which engages with the guide rail 310.

The partition wall 200 may tilt or fall over due to gas and sparks generated by thermal runaway of a battery cell 10. In some embodiments, pressure may be concentrated only in a portion of the partition wall 200, causing the partition wall 200 to move unevenly, and a problem may occur in which a protrusion 230 and a second hole 320 are not accurately engaged with each other. The guide rail 310 may prevent or reduce deviation of the partition wall 200 from a certain path even in the event of thermal runaway of a battery cell 10 and may assist in maintaining a stable and balanced position and movement.

The guide groove 20 may be engaged with the guide rail 310, and the partition wall 200 may move toward the side plate 300 along the guide groove 20 and the guide rail 310. In some embodiments, the partition wall 200 may be arranged parallel to the side plate 300 and may move toward the side plate 300 along a straight path. The partition wall 200 may easily move toward the side plate 300 through the guide rail 310 and the guide groove 20, which improves the accuracy of the engagement between the protrusions 230 and the second holes 320, so that the case 500 may be effectively sealed.

According to some embodiments, the partition wall 200 may include a guide rail 310. That is, the partition wall 200 and the lower plate 110 or the side plate 300 are not limited to specific configurations and may have complementary configurations. In some embodiments, in case that the partition wall 200 includes a guide rail 310, the lower plate 110 or the side plate 300 may include a guide groove 20, and conversely, in case that the lower plate 110 or the side plate 300 includes a guide rail 310, the partition wall 200 may include a guide groove 20.

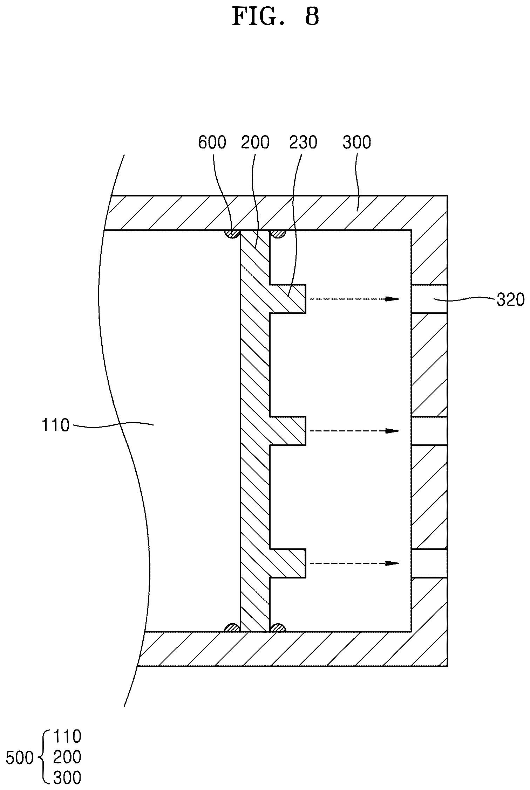

FIG. 8 is a plan view illustrating a modified example of FIG. 6.

Referring to FIG. 8, the battery module according to some embodiments may further include a fixing portion 600 which fixes the position of the partition wall 200. The fixing portion 600 may be for maintaining the stand upright of the partition wall 200 and the separation distance from the side plate 300.

According to some embodiments, the fixing portion 600 may be attached to an area where the lower plate 110 and the partition wall 200 are perpendicular to each other to fix the position of the partition wall 200. According to some embodiments, the fixing portion 600 may be attached to an area where the side plate 300 and the partition wall 200 are perpendicular to each other or an area where the partition wall 200, the side plate 300, and the lower plate 110 intersect with each other. The fixing portion 600 may prevent or reduce the movement of the partition wall 200 and secure a space for expansion and cooling between the partition wall 200 and the side plate 300.

The fixing portion 600 may be deformed due to shock, vibration, temperature, pressure, or the like which occur during thermal runaway of a battery cell. The fixing portion 600 may be deformed when a temperature exceeds a preset temperature, and for example, the physical and mechanical properties of the fixing portion 600 may change due to high temperature. According to some embodiments, in case that the internal temperature of the battery module exceeds the glass transition temperature, the fixing portion 600 may be PVC, PET, or PP, the properties of which change, but this is not limited thereto.

As the fixing portion 600 is deformed, the partition wall 200 may move toward the side plate 300. Thus, the partition wall 200 may be movable by deformation of the fixing portion 600. The partition wall 200, which has been moved, may block the open spaces of a first hole and a second hole 320 and seal the case 500. The case 500 may block gas and byproducts from moving and penetrating into an adjacent battery module and may delay or prevent or reduce the occurrence of an additional event, thereby improving the stability of the battery module.

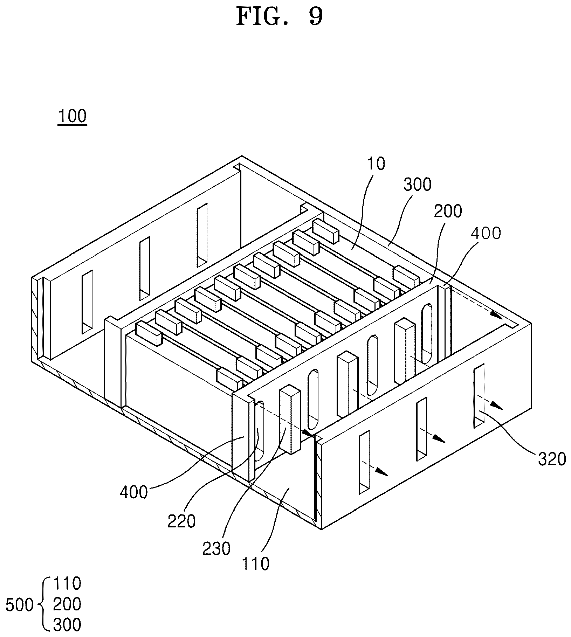

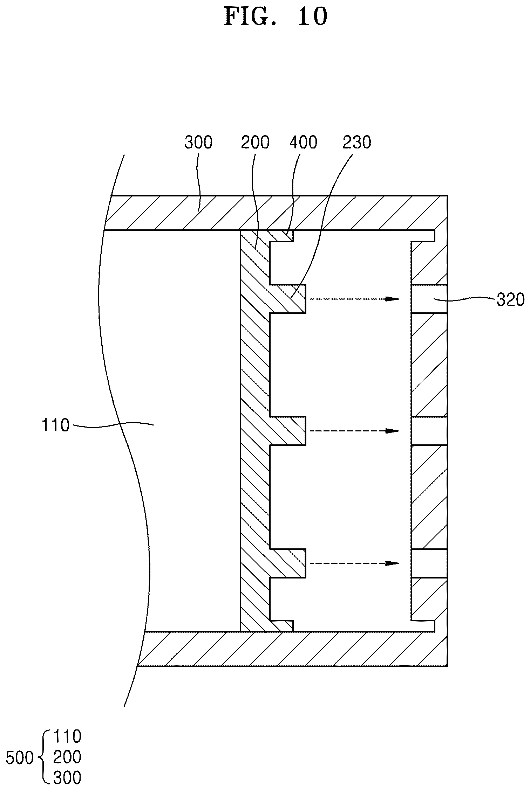

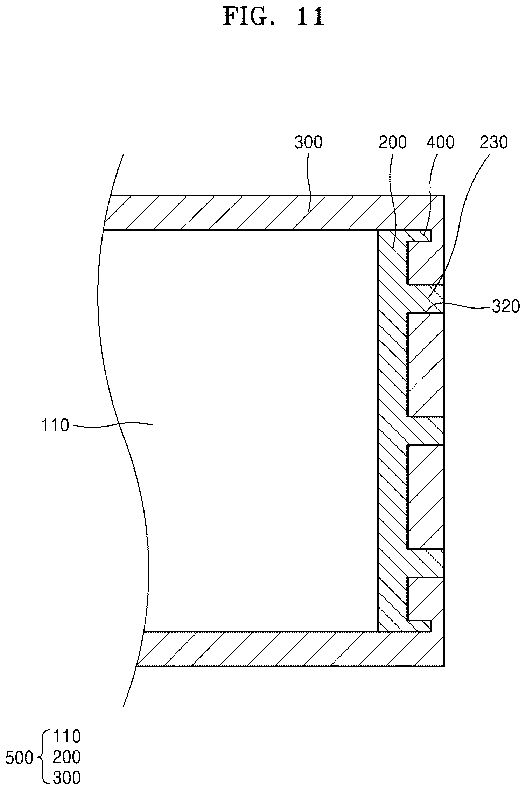

FIG. 9 is a perspective view schematically illustrating an example of a battery module according to some embodiments of the present invention, and FIGS. 10 and 11 are plan views for explaining an operation of the battery module of FIG. 9.

Referring to FIGS. 9 to 11, the partition wall 200 may include a support portion 400 which is bent toward the side plate 300. The support portion 400 may be for the stable stand upright of the partition wall 200 and may prevent or reduce movement of the partition wall 200 from moving or falling over due to vibration, pressure, or impact smaller than or equal to a certain size.

The partition wall 200 may be stably maintained in a vertical state by the support portion 400. The partition wall 200 may move toward the side plate 300 without being tilted or biased to a side. Through this, a protrusion 230 and a second hole 320 may be precisely engaged with each other and the case 500 may be sealed, thereby preventing or reducing the leakage of gas and particles.

The support portion 400 may increase the contact area between the partition wall 200, the side plate 300, and the lower plate 110 and may stably support the partition wall 200. According to some embodiments, the support portion 400 may support the lower surface of the partition wall 200 by expanding the contact surface between the partition wall 200 and the lower plate 110 or may support a side surface of the partition wall 200 by expanding the contact surface between the partition wall 200 and the side plate 300.

According to some embodiments, the side plate 300 may include a groove formed corresponding to the support portion 400. As the partition wall 200 moves, a protrusion 230 may engage with a second hole 320, and the support portion 400 may engage with the groove. The support portion 400 and the groove may increase the mechanical coupling strength of the partition wall 200 and the side plate 300 and increase the resistance of vibration and impact of the case 500.

An adhesive may be applied or a tape may be attached to the contact surface between the support portion 400 and the side plate 300 or the lower plate 110. The adhesion or attaching force between the support portion 400 and the two plates may be improved, thereby controlling a movement condition of the partition wall 200 due to thermal runaway of a battery cell 10.

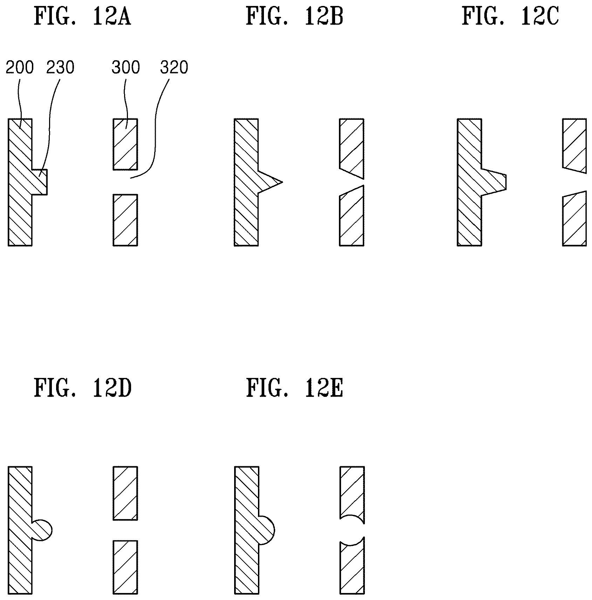

FIG. 12 is a drawing illustrating modified examples of the partition wall and the side plate of FIG. 1.

Referring to FIG. 12, a protrusion 230 may have various cross-sectional shapes. According to some embodiments, the cross section of a protrusion 230 may be polygonal, circular, semicircular, or the like. A second hole 320 may have various shapes and sizes to seal the case by engaging with a protrusion 230 or penetrating a protrusion 230.

The separation distance between the partition wall 200 and the side plate 300 may be 3 mm to 20 mm. The separation distance may vary depending on arrangements of battery cells and capacity, size, volume, or the like of the battery module.

In case that the separation distance is less than 3 mm, it may be difficult to cool the battery module. Due to insufficient space for air flow, air circulation between the partition wall 200 and the side plate 300 may not occur smoothly. According to some embodiments, excessive pressure may be applied to the battery module due to insufficient space for expansion of the battery module.

In case that the separation distance exceeds 20 mm, there may be a problem in completely sealing the battery module when a thermal event occurs. According to some embodiments, the movement of the partition wall 200 due to thermal runaway of a battery cell may not be sufficient, and a protrusion 230 of the partition wall 200 and a second hole 320 of the side plate 300 may not be engaged with each other, resulting in the emission of flames or flying substances. According to some embodiments, increasing the size and volume of the battery module may cause a problem in reducing energy capacity density.

According to the embodiments of the invention, the stability of a battery module may be improved by efficiently cooling the battery module and preventing or reducing the leakage of heat, gas, and flames generated during thermal runaway.

However, the characteristics of embodiments according to the present invention are not limited to the characteristics described above, and other characteristics not mentioned will be more clearly understood by those skilled in the art from the description of the invention described below.

## Claims

1. A battery module (100), comprising:
a plurality of battery cells (10); and
a case (500) accommodating the plurality of battery cells (10), wherein the case (500) includes:
a lower plate (110) supporting lower portions of the plurality of battery cells (10);
a side plate (300) defining an accommodating space for the plurality of battery cells (10) together with the lower plate (110); and
a partition wall (200) between the side plate (300) and the plurality of battery cells (10), the partition wall (200) being spaced apart from the side plate (300).

2. The battery module (100) of claim 1, further comprising
a fixing portion (600) fixing a position of the partition wall (200), wherein
the fixing portion (600) is deformable based on a temperature exceeding a preset temperature,
and the partition wall (200) is movable by deformation of the fixing portion (600).

3. The battery module (100) of claim 1 or 2, wherein the partition wall (200) includes a plurality of first holes (220).

4. The battery module (100) of any of claims 1 to 3, wherein the partition wall (200) includes a plurality of protrusions (230) facing the side plate (300).

5. The battery module (100) of any of claims 1 to 4, wherein the side plate (300) includes a plurality of second holes (320).

6. The battery module (100) of claim 5, wherein the plurality of second holes (320) are misaligned with the plurality of first holes (220).

7. The battery module (100) of claim 5, wherein the plurality of second holes (320) are arranged such that the plurality of protrusions (230) penetrate the second holes (320).

8. The battery module (100) of claim 5, wherein each of the plurality of second holes (320) has a shape corresponding to each of the plurality of protrusions (230).

9. The battery module (100) of any of claims 1 to 8, wherein the partition wall (200) is movable toward the side plate (300).

10. The battery module (100) of any of claims 1 to 9, wherein the partition wall (200) includes a support portion (400) bent toward the side plate (300).

11. A battery module (100), comprising:
a plurality of battery cells (10); and
a case (500) accommodating the plurality of battery cells (10), wherein the case (500) includes:
a lower plate (110) supporting lower portions of the plurality of battery cells (10);
a partition wall (200) at a side of each of the plurality of battery cells (10) and including a plurality of first holes (220); and
a side plate (300) defining an accommodating space for the plurality of battery cells (10) and the partition wall (200) together with the lower plate (110) and including a plurality of second holes (320), and
the plurality of first holes (220) and the plurality of second holes (320) are be misaligned with each other.

12. The battery module (100) of claim 11, wherein the partition wall (200) is spaced apart from the side plate (300).

13. The battery module (100) of claim 11 or 12, wherein the partition wall (200) is movable toward the side plate (300).

14. The battery module (100) of any of claims 11 to 13, wherein the partition wall (200) includes a plurality of protrusions (230) facing the side plate (300).

15. The battery module (100) of any of claims 11 to 14, wherein
at least one of the lower plate (110) or the side plate (300) includes a guide rail (310) configured to guide movement of the partition wall (200), and
the partition wall (200) includes a guide groove (20) configured to engage the guide rail (310).
